# EUROPÄISCHE PATENTSCHRIFT

(11) **EP 0 503 526 B1**
(45) Veröffentlichungstag und Bekanntmachung des Hinweises auf die Patenterteilung: **15.05.1996**
(21) Anmeldenummer: 92103983.0
(22) Anmeldetag: 09.03.1992
(51) Int. Cl.: H01M 8/24

(54) **Keramisches Festelektrolyt enthaltendes Brennstoffzellenmodul und Verfahren zu seiner Herstellung**
Fuel cell module comprising ceramic solid electrolyte and method of manufacture
Module de cellules à combustible à électrolyte solide céramique et procédé de sa fabrication

(30) Priorität: 13.03.1991 DE 4107924; 06.11.1991 DE 4136448
(43) Veröffentlichungstag der Anmeldung: 16.09.1992
(73) Patentinhaber: ABB PATENT GmbH, D-68309 Mannheim (DE)
(72) Erfinder: Rohr, Franz-Josef, Dr., W-6941 Abtsteinach (DE); Reich, Andreas, W-6900 Heidelberg (DE); Pfeifer, Norbert, W-6906 Sandhausen (DE)
(74) Vertreter: Rupprecht, Klaus, Dipl.-Ing.

(56) Entgegenhaltungen:
- DE-A- 2 160 359
- FR-A- 2 305 865
- GB-A- 1 143 116
- GB-A- 2 175 736
- US-A- 4 499 663
- PATENT ABSTRACTS OF JAPAN vol. 12, no. 430 (E-682)(3277) 14. November 1988

## Beschreibung

Die Erfindung bezieht sich auf ein Brennstoffzellenmodul mit mehreren Brennstoffzellen, die einen sauerstoffionenleitenden Festelektrolyten aufweisen, sowie auf ein Verfahren zur Herstellung des Moduls.

Aus der DE 39 07 485 ist ein Brennstoffzellenmodul bekannt, das aus einem porösen keramischen Träger mit inneren Gaskanälen und außen aufgebrachten Schichten zur Bildung mehrerer Brennstoffzellen und zu deren elektrischer Parallel- und Serienschaltung besteht. In der genannten Druckschrift sind auch Einzelheiten zum Aufbau und zur Arbeitsweise einer Brennstoffzellenbatterie beschrieben, in der solche Brennstoffzellenmodule eingesetzt werden können. In einer Brennstoffzellenbatterie wird den Kathoden der Brennstoffzellen ein sauerstoffhaltiges Gas, z.B. Luft oder auch reiner Sauerstoff zugeleitet und an der Außenfläche der Anoden der Brennstoffzellen wird ein gasförmiger oder vergaster Brennstoff vorbeigeleitet, wobei z.B. H2 oder H2/CO als Brenngas geeignet ist.

Außer dem erwähnten Konzept zum Aufbau einzelner Zellen und von Brennstoffzellenmodulen sind noch weitere Konzepte, mit z.B. röhren-, scheiben- und folienartigen Brennstoffzellen bekannt geworden. Alle Brennstoffzellenkonzepte haben gewisse Vor- und Nachteile und stehen deshalb bis zu einer künftigen Entscheidung in einem technischen Wettbewerb. Es gibt eine Reihe von Gründen, weshalb bestimmte Konzepte, die aufgrund theoretischer Überlegungen oder aufgrund von Untersuchungsergebnissen an relativ kleinen Brennstoffzellenanordnungen vorteilhaft zu sein scheinen, sich möglicherweise beim späteren Scaling-up zu größeren Batterien nicht bewähren. Solche Gründe können z.B. hohe Kosten für die notwendigen, z.B. hochreinen Materialien oder für aufwendige Herstellverfahren sein. Andere Gründe könnten bisher ungelöste technologische Probleme sein, die zu - dem Fachmann geläufigen - Qualitätsproblemen durch Rißbildung oder ungenügende Gasdichtigkeit an Abdichtungs- oder Verbindungsstellen führen.

In der GB 2,175,736A ist ein Konzept für die Bildung von Brennstoffzellenmodulen beschrieben, wobei das Modul aus mehreren übereinandergestapelten Segmenten gebildet ist, und wobei ein inaktiver Träger für Brennstoffzellen vermieden ist. Die Segmente haben eine Wabenstruktur, wobei nebeneinanderliegende Waben als Gaskanäle für Brenngas bzw. für ein Oxidationsmittel (Luft) genutzt sind. Tragendes Element der Waben sind Elektroden aus Anodenmaterial oder aus Kathodenmaterial. Zwischen die Elektroden ist eine nur 0,002 bis 0,01 cm dünne Schicht aus Elektrolytmaterial bzw. aus Verbindungmaterial für die elektrische Serienschaltung von Segmenten gefügt, mit der Gasdichtigkeit erreicht werden soll.

Davon ausgehend liegt der Erfindung die Aufgabe zugrunde, ein auf einem anderen Konzept beruhendes Brennstoffzellenmodul und ein Verfahren zu dessen Herstellung anzugeben, mit dem obengenannte Qualitätsprobleme weitestgehend vermeidbar sind.

Der erste Aufgabenteil wird gelöst durch ein Brennstoffzellenmodul mit mehreren Brennstoffzellen, die einen sauerstoffionenleitenden keramischen Festelektrolyten aufweisen, wobei mehrere Brennstoffzellensegmente zur Bildung des Brennstoffzellenmoduls übereinandergestapelt angeordnet und mit Hilfe einer elektrisch leitenden Verbindungsschicht gasdicht miteinander verbunden und elektrisch in Serie geschaltet sind, und die Brennstoffzellensegmente in einer wabenförmigen Struktur ausgeführt sind, wobei abwechselnd nebeneinanderliegende Brenngaskanäle und Luftkanäle gebildet sind, und wobei die Brennstoffzellensegmente aus einem selbsttragenden, gasdichten Festelektrolytkörper mit 0,2 bis 1 mm Dicke aufgebaut sind, der die inneren oben und unten offenen Gaskanäle bildet und mit porösen Elektrodenschichten zumindest auf seinen inneren Kanalwänden versehen ist, und Anodenschichten der Brenngaskanäle jeweils ein erstes Kanalende, d. h. die Stirnfläche mit überdecken und vom zweiten Kanalende zurückgesetzt sind, wodurch ein unbeschichtetes Kanalstück übrigbleibt, und entsprechend Kathodenschichten der Luftkanäle das zweite Kanalende überdecken und vom ersten Kanalende zurückgesetzt sind.

Vorteilhafte Ausgestaltungen hierzu sind in den abhängigen Ansprüchen angegeben und auch der weiteren Beschreibung zu entnehmen.

Der zweite Aufgabenteil wird durch ein Verfahren gemäß Patentanspruch 13 gelöst, das außerdem nachstehend beschrieben ist. Zum Herstellverfahren sind in weiteren Patentansprüchen Varianten und Ausgestaltungen angegeben.

Mit der Erfindung wird eine vorteilhafte Gestaltung der einzelnen Brennstoffzellen in Form von Brennstoffzellensegmenten und ihrer Zusammenfügung zu Modulen vorgeschlagen. Da der Festelektrolytkörper der Brennstoffzellensegmente selbsttragend ist und Gaskanäle enthält, ist kein zusätzlicher Träger erforderlich. Anstelle einer sonst erforderlichen Parallelschaltung von Einzelzellen kann bei der vorgeschlagenen Bauweise durch einfaches Erweitern der Gaskanalstruktur die Leistung eines Brennstoffzellensegments erhöht werden. Das gesamte Brennstoffzellenmodul weist vorteilhaft wenige Abdichtungs- und Verbindungsstellen auf. Die erforderliche elektrische Serienschaltung von Brennstoffzellen erfolgt vorteilhaft ohne äußere Verschaltung durch die Stapelung der Segmente.

Eine ausführlichere Beschreibung der Erfindung erfolgt nachstehend anhand von in der Zeichnung dargestellten Ausführungsbeispielen, die sich auf zwei unterschiedliche Varianten des Brennstoffzellenmoduls beziehen. Die erste Variante betrifft eine Ausführung mit wabenförmigen Brennstoffzellensegmenten, wobei Brenngas- und Luftkanäle nebeneinander liegen. Die zweite Variante enthält im Elektrolytkörper nur eine Art von Gaskanälen.

Es zeigt:
- Figur 1: ein einzelnes Brennstoffzellensegment gemäß Variante 1,
- Figur 2: drei Brennstoffzellensegmente vor der Zusammensetzung durch Stapeln und Sintern zu einem Modul mit elektrischer Serienschaltung (Variante 1),
- Figur 3: Brennstoffzellenmodul mit Gasverteilerplatten (Variante 1),
- Figur 4 und 5: Brennstoffzellensegment gemäß Variante 2,
- Figur 6 und 7: Brennstoffzellenmodul ohne Gasverteilerplatten (Variante 2).

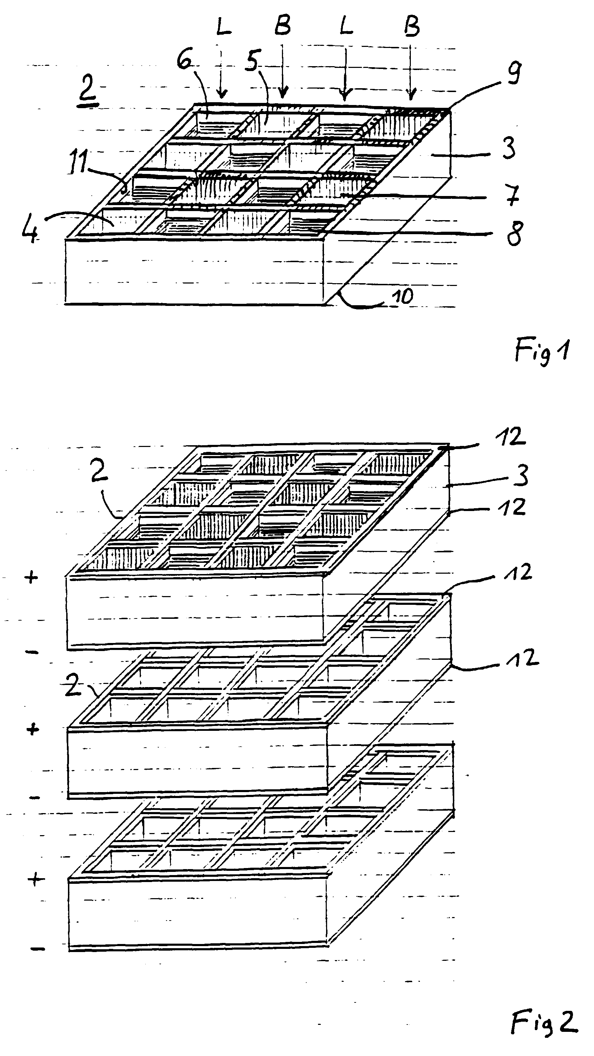

Figur 1 zeigt ein wabenförmiges Brennstoffzellensegment 2 gemäß einer Modulvariante 1. Hauptkomponente des Brennstoffzellensegments 2 ist ein gasdichter, sauerstoffionenleitender, selbsttragender, wabenförmiger Festelektrolyt 3 aus Yttrium-dotiertem Zirkonoxid mit einer Wandstärke von etwa 0,2 bis 1 mm. Die einzelnen Waben 4 des Brennstoffzellensegments 2 werden als abwechselnd nebeneinanderliegende Brenngaskanäle 5 und Luftkanäle 6 nutzt. Die Kanäle 5, 6 haben einen Querschnitt von etwa 2mm x 2mm bis 10mm x 10mm und sind etwa 5 bis 25 mm lang. Die Wände in den Kanälen 5, 6 sind mit Elektrodenmaterial 7, 8 mit einer Dicke von etwa 50 bis 350µm beschichtet. Das Elektrodenmaterial 7, 8 ist porös und elektronenleitend. Die Luftkanäle 6 sind mit einer Kathodenschicht aus z.B. La(Sr)MnO₃ versehen; die Brennstoffkanäle 5 mit einer Anodenschicht 7 aus z.B. Ni/ZrO₂. Die Anodenschicht 7 ist jeweils bis über ein erstes Kanalende 9, das in Figur 1 oben liegt, geführt. Die Anodenschicht 7 reicht nicht ganz bis zum unten liegenden zweiten Kanalende 10. Es bleibt somit ein unbeschichtetes Kanalstück 11 mit 1 bis 4 mm Länge als Isolierstrecke übrig, wie in Figur 1 am Beispiel der entsprechend ausgeführten Kathodenschicht 8 dargestellt ist. Durch Pfeile ist angedeutet, daß die Luftkanäle 6 Luft L und entsprechend die Brenngaskanäle 5 Brenngas B führen.

Figur 2 zeigt drei Brennstoffzellensemgente 2, die auf ihren Kanalenden 9, 10 mit einer elektrisch leitenden Verbindungsschicht versehen sind. Als elektrisch leitende Verbindungsschicht ist ein Interkonnektor-Material aus z.B. La(Mg, Ca, Sr)CrO₃ und/oder Nickel geeignet. Durch die Art der Elektrodenbeschichtung 7, 8 wird erreicht, daß jeweils oben am Brennstoffzellensegment 2 ein Pluspol und unten ein Minuspol entsteht. Eine Serienschaltung der Brennstoffzellen läßt sich somit einfach durch Übereinanderstapeln der einzelnen Zellensegmente herstellen.

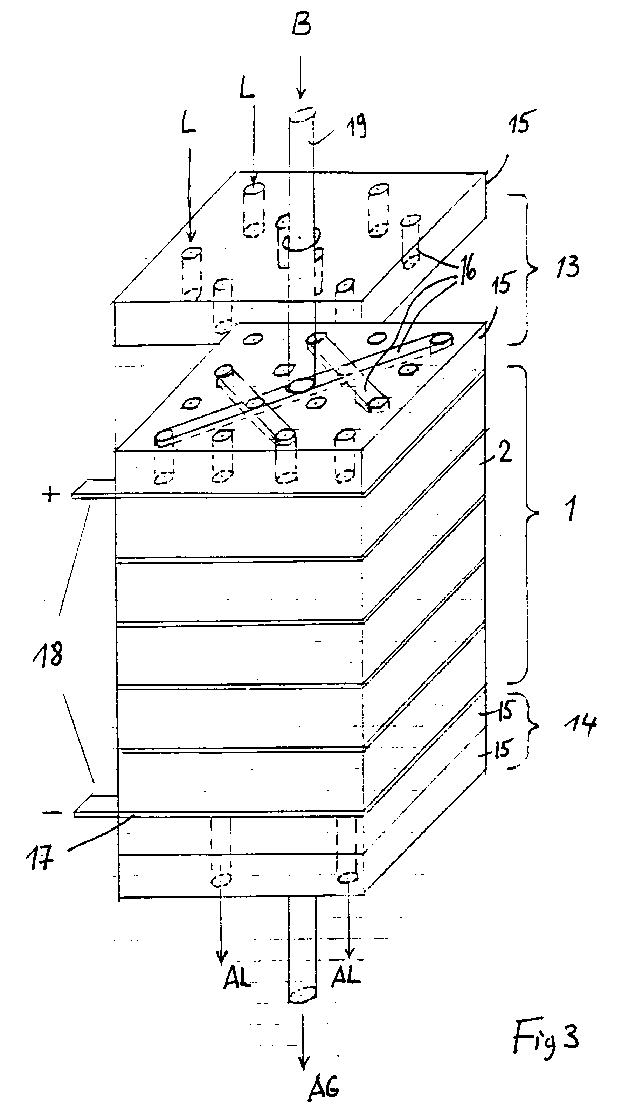

Figur 3 zeigt ein aus mehreren Brennstoffzellensegmenten 2 zusammengesetztes Brennstoffzellenmodul 1, das ergänzt ist durch keramische oder metallische Platten 15 mit Verteilerkanälen 16 zur Bildung eines Gasverteilers 13 und eines am Ende des Stapels angeordneten Gassammlers 14. Im dargestellten Beispiel wird das Brenngas B über ein Rohr 19 zu Verteilerkanälen 16 im Gasverteiler 13 zu den Brenngaskanälen 5 der Brennstoffzellensegmente 2 geführt. Die Luft L wird durch mehrere durch beide Platten 15 gerade hindurchführende Verteilerkanäle 16 direkt zu den Luftkanälen 6 geführt. In entsprechender Weise ist das Abgas AG im Gassammler 14 zusammengeführt und die Abluft durch mehrere Kanäle 16 abgeführt. Die Verbindung des Gasverteilers 13 bzw. Gassammlers 14 mit dem Modul 1 erfolgt unter Zwischenfügung eines dünnen, z.B. 0,1 bis 0,5 mm dicken Nickelblechs 17, das als Stromabnehmer 18 herausgeführt ist.

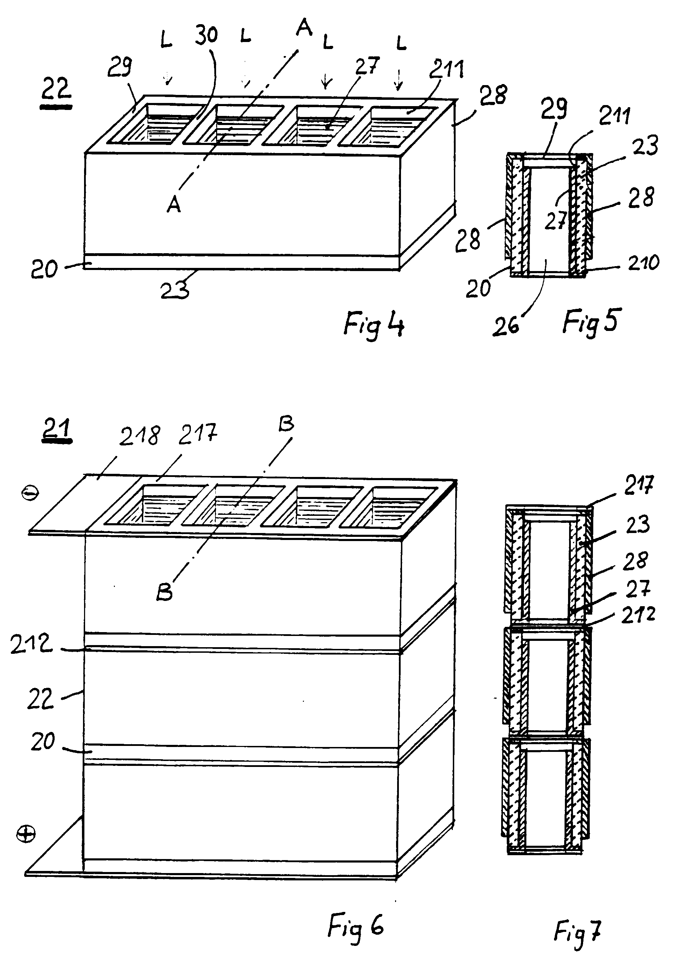

Eine zweite Modulvariante für ein Brennstoffzellenmodul mit einem selbsttragenden Elektrolyten und mit inneren Gaskanälen ist in den Figuren 4 bis 7 dargestellt. Bei dieser zweiten Variante sind im Vergleich zur ersten Variante einfachere Gasverteiler am Anfang und Ende des Stapels ausreichend, da die Gaskanäle nur eine Gasart, also entweder Brenngas oder Luft führen. In den Figuren 4 bis 7 ist eine Ausführung dargestellt, bei der die Kanäle Luft führen und dementsprechend die Innenwände mit Kathodenelektroden versehen sind. Die Außenwände des Elektrolytkörpers sind bei der zweiten Modulvariante ebenfalls mit Elektrodenmaterial, nämlich Anodenmaterial beschichtet. Es versteht sich, daß bei einer Ausführung mit inneren Brenngaskanälen sich die Anordnung von Anoden- und Kathodenelektroden umkehrt.

Figur 5 zeigt ein Brennstoffzellensegment 22, das aus einem Festelektrolytkörper 23 mit Luftkanälen 26 besteht, der mit Kathodenschichten 27 innerhalb der Kanäle 26 und einer Anodenschicht 28 auf seinen Außenwänden versehen ist. Die Herstellung der etwa 0,05 bis 0,2 mm dicken Elektrodenschicht erfolgt nach dem Maskieren der nicht zu beschichtenden Flächen durch Tauchen, Sprühen, Siebdrucken und anschliessender Sinterung oder durch Plasma- bzw. Flammspritzen.

Figur 5 zeigt einen Schnitt durch die Ebene A-A des in Figur 4 gezeigten Brennstoffzellensegments 22. Daraus ist ersichtlich, daß die Anodenschicht 28 über das oben liegende erste Kanalende 29 geführt ist, während in einem unteren Wandbereich 20 die Außenwand des Festelektrolyten 23 unbeschichtet geblieben ist. Die Kathodenschicht 27 ist im Inneren der Kanäle 26 aufgebracht und am unten liegenden zweiten Kanalende 210 um die Kante herumgeführt, so daß die untere Auflagefläche des Festelektrolyten 23 ebenfalls mit Kathodenmaterial beschichtet ist. In einem oberen Kanalstück 211 ist die Innenwand der Luftkanäle 26 unbeschichtet. Durch die unbeschichteten Bereiche 20 und 211 wird eine elektrische Verbindung zwischen Anoden- und Kathodenschichten vermieden.

Der Figur 4 ist zu entnehmen, daß der Innenraum des Festelektrolyten 23 durch Stege 30 unterteilt ist,, so daß mehrere Luftkanäle 26 entstehen. Die Unterteilung des Innenraums hat Stabilitätsgründe, d.h. die Stege 30 verschaffen dem Elektrolytkörper 23 eine hohe mechanische Festigkeit, und sie bewirkt auch eine günstige laminare Luftströmung. Da die Beschichtung der Stege 30 mit der Kathodenschicht 27 im Betrieb wirkungslos ist, kann die Beschichtung durch entsprechende Maskierung während des Beschichtungsvorgangs auch vermieden werden.

Die verwendeten Materialien stimmen mit denjenigen die zur ersten Modulvariante genannt wurden überein. Die typischen Abmessungen des Brennstoffzellensegments 22 sind: Segmenthöhe, d.h. Länge der Kanäle, 1 bis 5 cm, Breite quer zur Kanalrichtung 5 bis 20 cm, Tiefe etwa 0,5 bis 1,5 cm. Die Wandstärke des Festelektrolytkörpers 23 liegt bei 0,02 bis 0,1 cm. Der unbeschichtete Streifen im Bereich 20, 211 ist etwa 2 bis 4 mm breit. Die porösen und elektronenleitenden Elektrodenschichten sind 0,05 bis 0,35 mm dick.

Die Figuren 6 und 7 zeigen ein Brennstoffzellenmodul 21, das aus drei Brennstoffzellensegmenten 22 zusammengesetzt ist, und am Modulanfang und -ende jeweils ein Nickelblech 217 für einen Stromabgriff 218 aufweist. Zur Verbindung der Brennstoffzellensegmente 22 untereinander kann jeweils eine 0,05 bis 0,25 mm dicke Nickelfolie als elektrisch leitende Verbindungsschicht 212 zwischengefügt und unter Druckbelastung bei etwa 1000 bis 1200° C eine Verbindung herbeigeführt werden. Anstelle der Nickelfolie kann als elektrisch leitende Verbindungsschicht, d.h. als Interkonnekt-Material, auch eine Nickelpaste oder eine Paste aus La(Mg, Ca, Sr)CrO₃ durch Tauchen oder Sprühen auf die Stirnflächen aufgebracht werden und unter Druckbelastung bei Temperaturen von 1100 bis 1400°C eine Verbindung durch Sintern hergestellt werden. Die hergestellte Verbindung muß gasdicht und gut elektrisch leitend sein. Figur 7 zeigt einen Schnitt durch die in Figur 6 eingetragene Ebene B-B.

Ein bevorzugtes Verfahren, das sinngemäß sowohl zur Herstellung eines Moduls nach Variante 1, als auch zur Herstellung eines Moduls nach Variante 2 geeignet ist, enthält nachstehende Arbeitsschritte:
a) Extrusion des aus ZrO₂/Y₂O₃ bestehenden Festelektrolyten zu einem stangenförmigen, Kanäle aufweisenden Körper und Schneiden des Körpers in Abschnitte von 0,5 bis 50 mm Höhe;
b) Dichtsintern der Abschnitte bei 1400 bis 1650°C zur Fertigstellung des Festelektrolyten (3,23);
c) Maskieren bzw. Verschließen der nicht zu beschichtenden Kanalstücke (11,211) in den Luftkanälen (6,26) und, soweit vorhanden, der gesamten Brennstoffkanäle (5) und Aufbringen der Kathodenschicht schicht (8,27) als Luftelektrode durch Eintauchen in eine Suspension des Kathodenmaterials, z.B. La(Sr)MnO₃; anschließend Trocknen der Suspensionsschicht;
d) Maskieren und Beschichten der Brenngaskanäle (5) mit Anodenmaterial, z.B. Ni/ZrO₂, entsprechend den Arbeitsschritten c) bzw. Maskieren und Beschichten der Außenwände des Elektrolyten (23);
e) Aufbringen der elektrisch leitenden Verbindungsschicht (12,212) auf beide Stirnflächen des Festelektrolyten (3,23) durch 0,5 bis 1 mm tiefes Eintauchen in eine Suspension eines Interkonnektor-Materials, z.B. La(Sr, Ca, Mg)CrO₃ zur Fertigstellung eines Brennstoffzellensegments (2,22);
f) Zusammenfügen mehrerer Brennstoffzellensegmente (2,22) zu einem Modul (1,21) und Sintern bei 1350 bis 1600°C unter Druckbelastung, d.h. durch aufeinanderpressen der Segmente (2,22).

Der Arbeitsschritt e) kann dadurch abgewandelt werden, daß Nickel als Folie mit 0,05 bis 0,25 mm Dicke oder Paste mit oder ohne Interkonnektor-Materialschicht eingesetzt wird, wobei die Sinterung bei 1100 bis 1400°C in Inertgas, d.h. in nichtoxidierender Atmosphäre, z.B. Stickstoff, durchgeführt wird. Die Platten 15 des Gasverteilers bzw. -sammlers werden über dünne Nickelbleche durch Drucksinterung (Pressure-Bonding) mit den Stirnflächen des Moduls 1 verbunden.

## Patentansprüche

1. Brennstoffzellenmodul mit mehreren Brennstoffzellen, die einen sauerstoffionenleitenden keramischen Festelektrolyten aufweisen, wobei
a) mehrere Brennstoffzellensegmente (2) zur Bildung des Brennstoffzellenmoduls (1) übereinandergestapelt angeordnet und mit Hilfe einer elektrisch leitenden Verbindungsschicht (12) gasdicht miteinander verbunden und elektrisch in Serie geschaltet sind, und
b) die Brennstoffzellensegmente (2) in einer wabenförmigen Struktur ausgeführt sind, wobei abwechselnd nebeneinanderliegende Brenngaskanäle (5) und Luftkanäle (6) gebildet sind,
dadurch gekennzeichnet, daß
c) die Brennstoffzellensegmente (2) aus einem selbsttragenden, gasdichten Festelektrolytkörper (3) mit einer Wandstärke im Bereich von 0,2 bis 1 mm aufgebaut sind, der die inneren, oben und unten offenen Gaskanäle (5, 6) aufweist und mit porösen Elektrodenschichten (7, 8) zumindest auf seinen inneren Kanalwänden versehen ist,
d) Anodenschichten (7) der Brenngaskanäle (5) jeweils ein erstes Kanalende (9) an seinen Stirnflächen mit überdecken und vom zweiten Kanalende (10) zurückgesetzt sind, wodurch ein unbeschichtetes Kanalstück (11) übrigbleibt, und entsprechend Kathodenschichten (8) der Luftkanäle (6) das zweite Kanalende (10) an seinen Stirnflächen überdecken und vom ersten Kanalende (9) zurückgesetzt sind.

2. Brennstoffzellenmodul nach Anspruch 1, dadurch gekennzeichnet, daß zur Bildung eines Moduls (21)
- Brennstoffzellensegmente (22) verwendet sind, die nur Luftkanäle (26) enthalten,
- die Luftkanäle (26) innen mit Kathodenmaterial und die Außenwände der Brennstoffzellensegmente (22) mit Anodenmaterial beschichtet sind,
- die Kathodenschichten (27) jeweils ein zweites Kanalende (210) mit überdecken und von einem ersten Kanalende (29) zurückgesetzt sind, so daß ein unbeschichtetes Kanalstück (211) übrigbleibt, und
- die Anodenschichten (28) die ersten Kanalenden (29) mit überdecken und vor den zweiten Kanalenden (210) zurückgesetzt sind, so daß unbeschichtete Außenwandbereiche (20) übrigbleiben

3. Brennstoffzellenmodul nach Anspruch 1, dadurch gekennzeichnet, daß das Brennstoffzellenmodul (1) an einem Ende mit einem Gasverteiler (13) und an seinem anderen Ende mit einem Gasverteiler (13) und an seinem anderen Ende mit einem Gassammler (14) abgeschlossen ist, und daß der Gasverteiler (13) und der Gassammler (14) mit keramischen oder metallischen Platten (15) hergestellt ist, durch die Reaktionsgase Luft- und Brenngas in Verteiler- bzw. Sammlerkanälen (16) in die jeweiligen Kanäle (5, 6) des Moduls (1) zu- bzw. abgeleitet werden.

4. Brennstoffzellenmodul nach Anspruch 3, dadurch gekennzeichnet, daß zwischen den Gasverteilern bzw. Sammlern (13,14) und dem Modul (1) jeweils dünne Nickelbleche (17) angeordnet und gasdicht verbunden sind, wobei die Nickelbleche (17) als elektrische Anschlüsse (18) nutzbar sind.

5. Brennstoffzellenmodul nach einem der vorstehenden Ansprüche, dadurch gekennzeichnet, daß der Festelektrolyt (3,23) aus Yttrium-dotiertem Zirkonoxid besteht.

6. Brennstoffzellenmodul nach einem der Ansprüche 1, 4, 5, dadurch gekennzeichnet, daß der Querschnitt der Gaskanäle (5,6) etwa 2mm x 2mm bis 10mm x 10mm beträgt und die Länge eines Gaskanals (5,6) eines Brennstoffzellensegments (2) etwa 5 bis 25 mm beträgt.

7. Brennstoffzellenmodul nach einem der vorstehenden Ansprüche, dadurch gekennzeichnet, daß die Dicken der Elektrodenschichten (7,8,27,28) etwa 50 bis 350µm betragen.

8. Brennstoffzellenmodul nach einem der vorstehenden Ansprüche, dadurch gekennzeichnet, daß das Kathodenmaterial La(Sr)MnO₃ ist.

9. Brennstoffzellenmodul nach einem der vorstehenden Ansprüche, dadurch gekennzeichnet, daß das Anodenmaterial Ni/ZrO₂ ist.

10. Brennstoffzellenmodul nach einem der vorstehenden Ansprüche, dadurch gekennzeichnet, daß die elektrisch leitende Verbindungsschicht (12,212) aus La(Mg, Ca, Sr)CrO₃ und/oder Nickel besteht.

11. Brennstoffzellenmodul nach Anspruch 2, dadurch gekennzeichnet, daß die Höhe der Brennstoffzellensegmente (22) im Bereich von 1 bis 5 cm liegt, die Breite der Segmente (22) etwa 5 bis 20 cm und die Tiefe etwa 0,5 bis 1,5 cm beträgt.

12. Brennstoffzellenmodul nach Anspruch 2, dadurch gekennzeichnet, daß das Modul (21) an einem Ende mit einem Gasverteiler und am anderen Ende mit einem Gassammler abgeschlossen ist.

13. Verfahren zur Herstellung eines Brennstoffzellenmoduls nach einem der vorstehenden Ansprüche, gekennzeichnet durch nachstehende Arbeitsschritte:
a) Extrusion eines aus ZrO₂/Y₂O₃ bestehenden Festelektrolyten zu einem stangenförmigen, Kanäle aufweisenden Körper mit einer Festelektrolyt-Wandstärke im Bereich von 0,2 bis 1 mm und Schneiden des Körpers in Abschnitte von 0,5 bis 50 mm Höhe;
b) Dichtsintern der Abschnitte bei 1400 bis 1650°C zur Fertigstellung des Festelektrolyten (3,23);
c) Maskieren bzw. Verschließen der nicht zu beschichtenden Kanalstücke (11,211) in den Luftkanälen (6,26) und, soweit vorhanden, der gesamten Brennstoffkanäle (5) und Aufbringen der Kathodenschicht (8,27) als Luftelektrode durch Eintauchen in eine Suspension des Kathodenmaterials, z.B. La(Sr)MnO₃, wobei die Stirnflächen der Kanäle mitbeschichtet werden; anschließend Trocknen der Suspensionsschicht;
d) Maskieren und Beschichten der Brenngaskanäle (5) mit Anodenmaterial, z.B. Ni/ZrO₂, entsprechend den Arbeitsschritten c) bzw. Maskieren und Beschichten der Außenwände des Elektrolyten (23);
e) Aufbringen der elektrisch leitenden Verbindungsschicht (12,212) auf beide Stirnflächen des Festelektrolyten (3,23) durch 0,5 bis 1 mm tiefes Eintauchen in eine Suspension eines Interkonnektor-Materials, z.B. La(Sr, Ca, Mg)CrO₃ zur Fertigstellung eines Brennstoffzellensegments (2,22);
f) Zusammenfügen mehrerer Brennstoffzellensegmente (2,22) zu einem Modul (1,21) und Sintern bei 1350 bis 1600°C unter Druckbelastung, d.h. durch Aufeinanderpressen der Segmente (2,22).

14. Verfahren nach Anspruch 13, dadurch gekennzeichnet, daß im Arbeitsschritt e) Nickel als Folie oder Paste mit oder ohne Interkonnektor-Materialschicht eingesetzt wird, wobei die Sinterung bei 1100 bis 1400°C in Inertgas, d.h. in nichtoxidierender Atmosphäre durchgeführt wird.

15. Verfahren nach Anspruch 13 oder 14, dadurch gekennzeichnet, daß in einem weiteren Arbeitsschritt das Brennstoffzellenmodul (1) an den Enden durch keramische oder metallische Gasverteiler bzw. -Sammler (13,14) abgeschlossen wird, wobei die Verteiler (13) bzw. Sammler (14) in Form von Platten (15) über dünne Nickelbleche (17) durch Drucksinterung mit den Stirnflächen des Moduls (1) verbunden werden.

## Claims

1. Fuel-cell module comprising a plurality of fuel cells which have an oxygen-ion-conducting ceramic solid electrolyte,
a) a plurality of fuel-cell segments (2) being disposed stacked one on top of the other to form the fuel-cell module (1) and being interconnected gastightly with the aid of an electrically conducting connecting layer (12) and connected electrically in series,
b) and the fuel-cell segments (2) being formed in a honeycomb structure, mutually adjacent fuel-gas ducts (5) and air ducts (6) being formed alternately,
characterized in that
c) the fuel-cell segments (2) are made up of a self-supporting gastight electrolyte body (3) which has a wall thickness in the region of 0.2 to 1 mm and which comprises the internal gas ducts (5, 6), which are open at the top and bottom, and is provided with porous electrode layers (7, 8) at least on its internal duct walls,
d) anode layers (7) of the fuel-gas ducts (5) also overlap a first duct end (9) at its end faces, and are set back from the second duct end (10) respectively, as a result of which an uncoated duct section (11) is left over, and correspondingly cathode layers (8) of the air ducts (6) overlap the second duct end (10) at its end faces and are set back from the first duct end (9).

2. Fuel-cell module according to Claim 1, characterized in that, to form a module (21),
- fuel-cell segments (22) are used which contain only air ducts (26),
- the air ducts (26) are coated on the inside with cathode material and the external walls of the fuel-cell segments (22) are coated with anode material,
- the cathode layers (27) each also overlap a second duct end (210) and are set back from a first duct end (29), thereby leaving an uncoated duct section (211), and
- the anode layers (28) also overlap the first duct ends (29) and are set back from the second duct ends (210), thereby leaving uncoated external wall regions (20).

3. Fuel-cell module according to Claim 1, characterized in that the fuel-cell module (1) is terminated at one end by a gas distributor (13) and at its other end by a gas collector (14), and in that the gas distributor (13) and the gas collector (14) are produced using ceramic or metallic plates (15) through which the reaction gases air and fuel gas are fed into, or removed from, the respective ducts (5, 6) of the module (1) in distributor ducts or collector ducts (16).

4. Fuel-cell module according to Claim 3, characterized in that nickel sheets (17) are disposed and gastightly connected in each case between the gas distributors or gas collectors (13, 14) and the module (1), the nickel sheets (17) being capable of being used as electrical connections (18).

5. Fuel-cell module according to one of the preceding claims, characterized in that the solid electrolyte (3, 23) is composed of yttrium-doped zirconium oxide.

6. Fuel-cell module according to one of Claims 1, 4, 5, characterized in that the cross section of the gas ducts (5, 6) is approximately 2 mm × 2 mm to 10 mmx × 10 mm and the length of a gas duct (5, 6) of a fuel-cell segment (2) is approximately 5 to 25 mm.

7. Fuel-cell module according to one of the preceding claims, characterized in that the thickness of the electrode layers (7, 8, 27, 28) is approximately 50 to 350 µm.

8. Fuel-cell module according to one of the preceding claims, characterized in that the cathode material is La(Sr)MnO₃.

9. Fuel-cell module according to one of the preceding claims, characterized in that the anode material is Ni/ZrO₂.

10. Fuel-cell module according to one of the preceding claims, characterized in that the electrically conducting connecting layer (12, 212) is composed of La (Mg, Ca, Sr)CrO₃ and/or nickel.

11. Fuel-cell module according to Claim 2, characterized in that the height of the fuel-cell segments (22) is in the region of 1 to 5 cm, the width of the segments (22) is approximately 5 to 20 cm and the depth is approximately 0.5 to 1.5 cm.

12. Fuel-cell module according to Claim 2, characterized in that the module (21) is terminated at one end by a gas distributor and at the other end by a gas collector.

13. Method for producing a fuel-cell module according to one of the preceding claims, characterized by the following working steps:
a) extrusion of the solid electrolyte composed of ZrO₂/Y₂O₃ to form a bar-shaped body having ducts and having a solid electrolyte wall thickness in the region of 0.2 to 1 mm, and cutting of the body into sections 0.5 to 50 mm high;
b) compact sintering of the sections at 1400 to 1650°C to produce the solid electrolyte (3, 23);
c) masking or closure of those duct sections (11, 211) in the air ducts (6, 26) not to be coated and, if present, of all the fuel ducts (5) and application of the cathode layer (8, 27) as air electrode by immersion in a suspension of the cathode material, for example La(Sr)MnO₃, the end faces of the channels also being coated; then drying of the suspension layer;
d) masking and coating of the fuel-gas ducts (5) with anode material, for example Ni/ZrO₂, in accordance with the working steps c) or masking and coating of the external walls of the electrolyte (23);
e) application of the electrically conducting connecting layer (12, 212) to both end faces of the solid electrolyte (2, 23) by immersion to a depth of 0.5 to 1 mm in a suspension of an interconnector material, for example La(Sr, Ca, Mg)CrO₃ to produce a fuel-cell segment (2, 22);
f) assembly of a plurality of fuel-cell segments (2, 22) to form a module (1, 21) and sintering at 1350 to 1600°C under pressure loading, i.e. by pressing the segments (2, 22) onto one another.

14. Method according to Claim 13, characterized in that, in working step e), nickel is used as foil or paste with or without an interconnector material layer, the sintering being performed at 1100 to 1400°C in inert gas, i.e. in a non-oxidizing atmosphere.

15. Method according to Claim 13 or 14, characterized in that, in a further working step, the fuel-cell module (1) is terminated at the ends by ceramic or metallic gas distributors or gas collectors (13, 14), the distributors (13) or collectors (14) in the form of plates (15) being connected by pressure sintering to the end faces of the module (1) by means of thin nickel sheets (17).

## Revendications

1. Ensemble pile à combustible comprenant plusieurs cellules électrochimiques qui présentent un électrolyte solide céramique conducteur d'ions oxygène, dans lequel
a) plusieurs segments de pile à combustible (2) sont empilés les uns sur les autres pour former l'ensemble (1) de pile à combustible, sont liés les uns aux autres de manière étanche au gaz à l'aide d'une couche de liaison (12) électro-conductrice et sont connectés électriquement en série et
b) les segments de pile à combustible (2) sont réalisés sous forme de structure en nid d'abeille, des conduits (5) de gaz combustible et des conduits (6) d'air étant formés les uns à côté des autres, en alternance,
caractérisé en ce que
c) les segments de pile à combustible (2) sont constitués d'un corps (3) autoporteur en électrolyte solide avec une épaisseur de paroi comprise entre 0,2 et 1 mm qui comporte les canaux de gaz (5, 6) internes, ouverts en haut et en bas, et est pourvu, au niveau de ses parois intérieures au moins, de couches (7, 8) d'électrodes poreuses,
d) les couches d'anode (7) des canaux de gaz (5) recouvrent une première extrémité (9) de canal également au niveau de ses surfaces frontales et sont en retrait par rapport à la deuxième extrémité (10) de canal, laissant ainsi un tronçon (11) de canal non revêtu et, de la même manière, les couches de cathode (8) des canaux d'air (6) recouvrent la deuxième extrémité (10) de canal également au niveau de ses surfaces frontales et sont en retrait par rapport à la première extrémité (9) de canal.

2. Ensemble pile à combustible selon la revendication 1, caractérisé en ce que pour former un ensemble(21)
- on utilise des segments (22) de pile à combustible qui ne comportent que des canaux d'air (26),
- les canaux d'air (26) sont revêtus intérieurement de matériau de cathode et les parois extérieures des segments (22) de pile à combustible sont revêtues de matériau d'anode,
- les couches de cathode (27) recouvrent chaque fois une deuxième extrémité (210) de canal et sont en retrait par rapport à une première extrémité (29) de canal, de sorte qu'il subsiste un tronçon de canal (211) sans revêtement et
- les couches d'anode (28) recouvrent chaque fois les premières extrémités (29) de canal et sont en retrait par rapport aux deuxièmes extrémités (210) de canal, de sorte qu'il subsiste des parties de paroi extérieure (20) sans revêtement.

3. Ensemble pile à combustible selon la revendication 1, caractérisé en ce que l'ensemble (1) de pile à combustible est fermé à une extrémité par un distributeur de gaz (13) et à son autre extrémité par un collecteur de gaz (14) et en ce que le distributeur de gaz (13) et le collecteur de gaz (14) sont fabriqués à partir de plaques (15) céramiques ou métalliques au travers desquelles les gaz de réaction air et gaz combustible de canaux distributeurs et collecteurs (16) sont amenés dans les ou extraits des canaux (5, 6) correspondants de l'ensemble (1).

4. Ensemble pile à combustible selon la revendication 3, caractérisé en ce que de fines tôles de nickel (17) sont disposées et fixées de manière étanche au gaz entre les distributeurs et collecteurs (13, 14) et l'ensemble (1), les tôles de nickel (17) pouvant être utilisées comme connecteurs (18) électriques.

5. Ensemble pile à combustible selon l'une des revendications précédentes, caractérisé en ce que l'électrolyte solide (3, 23) est composé d'oxyde de zirconium dopé à l'yttrium.

6. Ensemble pile à combustible selon l'une des revendications 1, 4, 5, caractérisé en ce que la section des conduits de gaz (5,6) est comprise entre environ 2 mm * 2 mm et 10 mm * 10 mm et la longueur d'un canal de gaz (5, 6) d'un segment (2) de pile à combustible est comprise entre environ 5 mm et environ 25 mm.

7. Ensemble pile à combustible selon l'une des revendications précédentes, caractérisé en ce que les épaisseurs des couches d'électrode (7, 8, 27, 28) sont comprises entre environ 50 µm et 350 µm.

8. Ensemble pile à combustible selon l'une des revendications précédentes, caractérisé en ce que le matériau de cathode est du La(Sr)MnO₃.

9. Ensemble pile à combustible selon l'une des revendications précédentes, caractérisé en ce que le matériau d'anode est du Ni/ZrO₂.

10. Ensemble pile à combustible selon l'une des revendications précédentes, caractérisé en ce que la couche de liaison (12, 212) électro-conductrice est en La(Mg, Ca, Sr)CrO₃ et/ou nickel.

11. Ensemble pile à combustible selon la revendication 2, caractérisé en ce que la hauteur des segments (22) de pile à combustible est comprise entre 1 et 5 cm, la largeur des segments est comprise entre environ 5 et 20 cm et la profondeur entre environ 0,5 et 1,5 cm.

12. Ensemble pile à combustible selon la revendication 2, caractérisé en ce que l'ensemble (21) est fermé à une extrémité par un distributeur de gaz et à l'autre extrémité par un collecteur de gaz.

13. Procédé de fabrication d'un ensemble pile à combustible selon l'une des revendications précédentes caractérisé par les étapes suivantes:
a) extrusion d'un électrolyte solide en ZrO₂/Y₂O₃ pour former un corps en forme de barreau, pourvu de canaux, avec une épaisseur de parois comprise entre 0,2 et 1 mm et découpe du corps en tronçons d'une hauteur comprise entre 0,5 et 50 mm;
b) frittage à densité maximale des tronçons sous une température comprise entre 1400 et 1650 °C pour produire l'électrolyte solide (3, 23);
c) masquage et obturation des tronçons (11, 211) des canaux d'air (6, 26) ne devant pas être revêtus et, dans la mesure où ils existent, de la totalité des canaux de combustible (5) et application de la couche de cathode (8, 27) en tant qu'électrode d'air par immersion dans une suspension de matériau de cathode, par exemple La(Sr)MnO₃, les surface frontales des canaux étant revêtues en même temps, puis séchage de la couche de suspension;
d) masquage et revêtement des canaux de gaz combustible (5) avec le matériau d'anode, par exemple Ni/ZrO₂ selon les étapes c) et masquage et revêtement des parois extérieures de l'électrolyte (23);
e) application de la couche de liaison (12, 212) électroconductrice sur les deux faces frontales de l'électrolyte solide (3, 23) par immersion à une profondeur comprise entre 0,5 et 1 mm dans une suspension d'un matériau d'interconnexion, par exemple La(Sr, Ca,Mg)CrO₃ pour parachever un segment (2, 22) de pile à combustible;
f) réunion de plusieurs segments (2,22) de pile à combustible en un ensemble(1, 21) et frittage sous pression, c'est-à-dire avec application des segments (2, 22) les uns contre les autres, à une température comprise entre 1350 et 1600 °C.

14. Procédé selon la revendication 13, caractérisé en ce qu'au cours de l'étape e), on utilise le nickel sous forme de film ou de pâte avec ou sans couche de matériau d'interconnexion, le frittage étant réalisé sous une température comprise entre 1100 et 1400 °C, en atmosphère inerte, c'est-à-dire sous atmosphère non oxydante.

15. Procédé selon la revendication 13 ou 14, caractérisé en ce qu'au cours d'une étape supplémentaire, on ferme l'ensemble (1) de pile à combustible à ses extrémités par des distributeurs et collecteurs (13, 14) céramiques ou métalliques, les distributeurs (13) et collecteurs (14) qui se présentent sous la forme de plaques (15) étant liés aux faces frontales de l'ensemble(1) par l'intermédiaire de fines feuilles de nickel (17), par frittage sous pression.
